# EUROPÄISCHE PATENTSCHRIFT

(11) **EP 1 068 274 B1**
(45) Veröffentlichungstag und Bekanntmachung des Hinweises auf die Patenterteilung: **09.01.2002**
(21) Anmeldenummer: 99909992.2
(22) Anmeldetag: 25.03.1999
(51) Int. Cl.: C09G 3/00, C10M 105/04

(54) **GLEITMITTEL AUF BASIS VON OCTADECAN**
GLIDANT ON AN OCTADECANE BASIS
AGENT DE GLISSEMENT A BASE D'OCTADECANE

(30) Priorität: 27.03.1998 AT 54998
(43) Veröffentlichungstag der Anmeldung: 17.01.2001
(73) Patentinhaber: Schneider, Alfred, 8970 Schladming (AT)
(72) Erfinder: Schneider, Alfred, 8970 Schladming (AT)
(74) Vertreter: Gibler, Ferdinand, Dipl.Ing. Dr. techn.
(86) Internationale Anmeldenummer: AT9900080
(87) Internationale Veröffentlichungsnummer: WO9950367

(56) Entgegenhaltungen:
- PATENT ABSTRACTS OF JAPAN vol. 018, no. 173 (M-1581), 24. März 1994 (1994-03-24) & JP 05 337953 A (INOAC CORP), 21. Dezember 1993 (1993-12-21)
- DATABASE WPI Section Ch, Week 9141 Derwent Publications Ltd., London, GB; Class G02, AN 91-301552 XP002114506 & SU 1 624 004 A (KHRUSTALEV V F), 30. Januar 1991 (1991-01-30)
- DATABASE WPI Section Ch, Week 9305 Derwent Publications Ltd., London, GB; Class E19, AN 93-037046 XP002114507 & CS 9 100 142 A (KOVAL J), 12. August 1992 (1992-08-12)

## Beschreibung

Die Erfindung betrifft ein Gleitmittel, insbesondere Schiwachs zum Auftragen auf die Lauffläche eines Schisportgeräts, wie Schi, Bigfoot, Monoschi, Snowboard und dgl.

Bekannte Gleitmittel dienen der Verringerung des zwischen einem bewegten Gegenstand und seinem umgebenden Medium wirkenden Reibungswiderstandes.

So sind etwa Schiwachse für professionelle Schifahrer beliebte Hilfsmittel, um die Gleitfähigkeit ihrer Schier zu erhöhen. Abhängig von der vorherrschenden Schneetemperatur können nur durch Wahl des richtigen Schiwachses merkliche Verbesserungen der Abfahrtszeiten für Schifahrer erreicht werden. Schiwachse sind daher nach wie vor ein wichtiger Bestandteil des Rennmaterials für alpine und nordische Sportbewerbe.

Auch in anderen Gebieten der Technik können Gleitmittel vorteilhaft angewandt werden. Wichtigstes Beispiel ist die Schiffahrt. Zur Herabsetzung der Reibung zwischen der Schiffsrumpf-Oberfläche und dem Wasser bzw. der Umgebungsluft können auf den Schiffsrumpf Gleitmittel appliziert werden. Desgleichen können die Oberflächen von Fahr-und Flugzeugen mit einem Gleitmittel versehen werden, um ihre Reibung an der Umgebungsluft herabzusetzen. So können die Treibstoffkosten für die genannten Transportmittel stark herabgesetzt werden. Das Applizieren der Gleitmittel an den betreffenden Oberflächen kann im einfachsten Fall dadurch erfolgen, daß das erfindungsgemäße Gleitmittel Bestandteil des auf die Oberfläche aufzubringenden Lackes ist.

Aufgabe der Erfindung besteht darin, ein Gleitmittel der eingangs genannten Art anzugeben, welches die Gleitfähigkeit, insbesondere von Schisportgeräten erhöht.

Erfindungsgemäß wird dies dadurch erreicht, daß es zu zumindest 80 Gew.%, insbesondere 90 Gew.%, aus Octadecan (C₁₈H₃₈) und zum Rest aus zumindest einer anderen Kohlenstoffverbindung besteht.

Durch die Kombination von Octadecan mit einer weiteren Kohlenwasserstoffverbindung im angegebenen Verhältnis wird überraschenderweise eine viel höhere Gleitfähigkeit als mit bisher bekannten Schiwachsen erzielt.

In weiterer Ausbildung der Erfindung kann vorgesehen sein, daß es zu zumindest 95 Gew.% aus Octadecan (C₁₈H₃₈) besteht.

Dadurch kann bei Verwendung als Schiwachs für alle Schneetemperaturen bis maximal -1°C bis -4°C eine überraschende Steigerung der Gleitfähigkeit von Schigerätlaufflächen beobachtet werden.

Besonders bevorzugt ist dabei gemäß einer weiteren Ausführungsform der Erfindung, daß es zu 95,33 Gew.% aus Octadecan (C₁₈H₃₈) und zu 4,67 Gew.% aus einer anderen Kohlenstoffverbindung besteht.

Dadurch kann eine besonders starke Erhöhung der Gleiteigenschaften, insbesondere von Schiern erzielt werden.

In weiterer Ausgestaltung der Erfindung kann vorgesehen sein, daß die andere Kohlenstoffverbindung ein Alkan mit der Strukturformel CₙH₂ₙ₊₂ ist, wobei n=11 bis 36 ist.

Durch gezielte Auswahl eines anderen. zu Octadecan gemischten Alkans können die wichtigsten Eigenschaften eines Gleitmittels, nämlich Gleitfähigkeit, Haftfestigkeit des Gleitmittels an der mit ihm bestrichenen Oberfläche und Beschleunigung eingestellt werden.

Nach einer besonders bevorzugten Ausführungsform der Erfindung kann vorgesehen sein, daß die andere Kohlenstoffverbindung Eicosan (C₂₀H₄₂) ist.

Bei einem Gleitmittel dieser Zusammensetzung sind alle drei genannten Eigenschaften bei allen Schneetemperaturen bis maximal -1°C bis -4°C optimal.

Nach einer anderen Ausführungsform der Erfindung kann vorgesehen sein, daß die andere Kohlenstoffverbindung ein Fulleren ist.

Damit haftet das Gleitmittel besonders gut an der bestrichenen Oberfläche.

In diesem Zusammenhang hat es sich als besonders günstig erwiesen, daß es zu 99,88 Gew.% aus Octadecan (C₁₈H₃₈) und zu 0,12 Gew.% aus Fulleren besteht.

Damit ist neben einer guten Haftfestigkeit auch eine besonders gute Gleitfähigkeit gegeben.

Eine weitere Steigerung der Haftfestigkeit des erfindungsgemäßen Gleitmittels kann in weiterer Ausbildung der Erfindung dadurch erzielt werden, daß 0,1 Gew.% bis 2,0 Gew.% Kaliumdihydrogenphosphat beigemischt ist.

Nachfolgend wird die Erfindung vorallem anhand von Beispielen eingehend erläutert. Alle angegebenen Beispiele beziehen sich auf die Verwendung des erfindungsgemäßen Gleitmittels als Schiwachs. Dieses Schiwachs kann auf die Laufflächen von Schisportgeräten jedweder Art, also z.B. auf die Lauffläche eines Schis, Bigfoots, Monoschis, Snowboards und dgl. aufgetragen werden.

Es können die erfindungsgemäßen Mischungen aber auch für alle bekannten Arten von Gleitmitteln eingesetzt werden. So kann der Luftwiderstand bzw. der Wasserwiderstand eines Kraftfahrzeugs bzw. eines Schiffes durch Beigabe des erfindungsgemäßen Gleitmittels zum Oberflächenanstrich für die Karosserie bzw. den Schiffsrumpf merkbar erniedrigt werden, wodurch der Treibstoffverbrauch entsprechend gesenkt werden kann. Alternativ zur Beimischung in einen Oberflächenanstrich kann das erfindungsgemäße Gleitmittel analog zur separaten Auftragung auf die Lauffläche eines Schisportgerätes auch separat auf strömungsbeaufschlagte Oberflächen aufgetragen werden.

Allen nachstehenden Beispielen ist gemeinsam, daß jeweils ein Schiwachs hergestellt wird durch Vermischung von zumindest 80 Gew.% Octadecan (C₁₈H₃₈) mit einer anderen Kohlenstoffverbindung. Die besten Ergebnisse wurden allerdings mit noch höheren Octadecan-Anteilen, nämlich mit mindestens 90 Gew.%, vorzugweise mindestens 95 Gew.% erreicht.

Wenn hier von guten bzw. besseren Ergebnissen die Rede ist, so sind damit die wichtigsten Eigenschaften eines Gleitmittels gemeint. Diese Eigenschaften sind: die Gleitfähigkeit, die Haftfestigkeit des Gleitmittels auf der mit ihm bestrichenen Oberfläche und die Beschleunigung. Zur Abgrenzung von Gleitfähigkeit und Beschleunigung ist anzumerken, daß die Gleitfähigkeit den Reibungswiderstand einer bereits in Bewegung befindlichen Oberfläche und dem sie umgebenden Medium betrifft, während sich die Beschleunigung auf die Reibung zwischen einer (z.B. aus dem Stillstand) beschleunigten Oberfläche und dem sie umgebenden Medium bezieht.

Den erwähnten drei Eigenschaften wird in den verschiedensten Anwendungsbereichen unterschiedlich hohe Bedeutung zugemessen. Beispielsweise spielt für den Bereich des Schispringens bzw. -fliegens die Haftfestigkeit des Schiwachses eine untergeordnete Bedeutung, da die Athleten hier nur über sehr kurze Strecken (nämlich die Schanzenlänge) optimale Beschleunigungs- und Gleiteigenschaften benötigen. Löst sich das Schiwachs nach der Landung von den Schiern, so ist dies für die mögliche Leistung der Schispringer völlig uninteressant.

Anders liegen die Verhältnisse bei den Alpin-Bewerben. Insbesondere bei der Abfahrt und im Super-G ist es von eminenter Bedeutung, daß das Schiwachs während der gesamten Fahrdauer zuverlässig am Schi haftet. Kann diese Haftfestigkeit garantiert werden, so können Abstriche bei den Beschleunigungswerten durchaus in Kauf genommen werden.

Durch gezielte Auswahl der zu Octadecan gemischten Kohlenstoffverbindung können die Eigenschaften des Gleitmittels eingestellt werden.

Überraschenderweise hat sich herausgestellt, daß die besten Ergebnisse bei Verwendung von exakt 95,33 Gew.% Octadecan (C₁₈H₃₈) und exakt 4,67 Gew.% einer anderen Kohlenstoffverbindung erzielt wurden, wobei besagte andere Kohlenstoffverbindung ein Alkan mit der Strukturformel CₙH₂ₙ₊₂ war und wobei weiters n=11 bis 36 war.

### Beispiel A:

Es wurde ein Schiwachs durch Vermischen von 95,33 Gew.% Octadecan (C₁₈H₃₈) und 4,67 Gew.% Eicosan (C₂₀H₄₂) hergestellt und dann auf die Lauffläche eines Schis aufgetragen.

Es wurde festgestellt, daß alle drei erläuterten Gleitmitteleigenschaften bei dieser Mischung optimal sind. Keine der drei Eigenschaften wies maximale Werte auf, jedoch trat jede Eigenschaft mit besonders hoher Ausprägung. auf und dies nahezu unabhängig von der Schneetemperatur bis zum einem Maximalwert von -1°C bis -4°C.

Weiters hat sich herausgestellt. daß die angeführte Mischung, also 95,33 Gew.% Octadecan (C₁₈H₃₈) und 4,67 Gew.% Eicosan (C₂₀H₄₂), besonders gut als Gleitmittel für Schiffsrümpfe geeignet ist. Bei Schiffswachsen sind neben den bereits ängeführten drei Gleitmittel-Eigenschaften: Gleitfähigkeit, Haftfestigkeit des Gleitmittels auf der mit ihm bestrichenen Oberfläche und Beschleunigung auch die Eigenschaften UV-Beständigkeit und Antifouling von Interesse.

Unter Fouling wird der sich auf Schiffsrümpfen bildende Bewuchs von Algen verstanden. der Begriff "Antifouling" ist hiervon abgeleitet und bezeichnet die Eigenschaft eines Schiff-Anstriches bzw. eines Schiff-Gleitmittels, solchen Bewuchs zu verhindern.

Auch diese beiden Eigenschaften UV-Beständigkeit und Antifouling weisen bei einem Gleitmittel der gerade angeführten Zusammensetzung Optimalwerte auf, daneben ist die Gleitfähigkeit in Süß- wie auch in Salzwasser besonders hoch.

Sollen einzelne Eigenschaften (zu Lasten anderer Eigenschaften) erhöht werden, so müssen andere Alkane zu Octadecan hinzugemischt werden: Will man die Haftfestigkeit erhöhen, so ist dem Octadecan Docosan (C₂₂H₄₆), Tetracosan (C₂₄H₅₀), Squalan (C₃₀H₆₂) oder ein ähnliches längerkettiges Alkan hinzuzumischen. Daneben wurde herausgefunden, daß auch eine Mischung aus Fulleren und Octadecan zu höheren Haftfestigkeiten führt, allerdings ist hier ein höherer Octadecananteil, konkret 99,88 Gew.% Octadecan und 0,12 Gew.% Fulleren, zu wählen.

Will man Beschleunigung und Gleitfähigkeit maximieren, so ist dem Octadecan Heptadecan (C₁₇H₃₆), Hexadecan (C₁₆H₃₄), Pentadecan (C₁₅H₃₂), Tetradecan (C₁₄H₃₀) oder ein ähnliches kürzerkettiges Alkan hinzuzumischen.

Zur Vergrößerung der Temperaturbandbreite, innerhalb welcher sich die optimalen Gleitmittel-Eigenschaften zeigen, aber auch zur Vergrößerung der Anwendungsbandbreite (Gleitmittel kann z.B. auch bei Kunstschnee eingesetzt werden) sowie auch zur Vergrößerung der Eigenschaftsbandbreite (Gleitmittel weist z.B. höhere Gleitfähigkeit oder Haftfestigkeit auf) können Spuren von Docosan (C₂₀H₄₂) und Tetracosan (C₂₄H₅₀) zur erwähnten Mischung aus 95,33 Gew.% Octadecan (C₁₈H₃₈) und 4,67 Gew.% Eicosan (C₂₀H₄₂) hinzugemischt werden.

### Konkrete Beispiele von Gleitmitteln mit gegenüber dem Gleitmittel aus Beispiel A erhöhter Haftfestigkeit:

### Beispiel B:

95,33 Gew.% Octadecan
4,67 Gew.% Docosan (C₂₂H₄₆)

Die erhöhte Haftfestigkeit hat sich insbesondere bei Schneetemperaturen von maximal -4°C bis -7°C eingestellt.

### Beispiel C:

95,33 Gew.% Octadecan
4,67 Gew.% Tetracosan (C₂₄H₅₀)

Die erhöhte Haftfestigkeit hat sich insbesondere bei Schneetemperaturen von maximal -2°C bis -4°C eingestellt.

### Beispiel D:

95,33 Gew.% Octadecan
4,67 Gew.% Nonadecan (C₁₉H₄₀)

Die erhöhte Haftfestigkeit hat sich insbesondere bei Schneetemperaturen von -1°C bis -2°C eingestellt.

### Beispiel E:

95,33 Gew.% Octadecan
4,67 Gew.% Squalan (C₃₀H₆₂)

Die erhöhte Haftfestigkeit hat sich insbesondere bei Schneetemperaturen von kleiner -15°C eingestellt.

### Beispiel F:

99.88 Gew.% Octadecan
0.12 Gew.% Fulleren

Die erhöhte Haftfestigkeit hat sich insbesondere bei Schneetemperaturen von kleiner -20°C eingestellt.

### Konkrete Beispiele von Gleitmitteln mit gegenüber dem Gleitmittel aus Beispiel A erhöhter Gleitfähigkeit:

### Beispiel G:

95.33 Gew.% Octadecan
4,67 Gew.% Heptadecan (C₁₇H₃₆)

Die erhöhte Gleitfähigkeit hat sich insbesondere bei Schneetemperaturen im Bereich von - 2°C bis -4°C eingestellt.

### Beispiel H:

95,33 Gew.% Octadecan
4,67 Gew.% Hexadecan(C₁₆H₃₄)

Die erhöhte Gleitfähigkeit hat sich insbesondere bei Schneetemperaturen im Bereich von - 5°C bis - 10°C eingestellt.

### Beispiel I:

95,33 Gew.% Octadecan
4,67 Gew.% Tetradecan (C₁₄H₃₀)

Die erhöhte Gleitfähigkeit hat sich insbesondere bei Schneetemperaturen im Bereich von 0°C bis +3°C eingestellt.

### Beispiel J:

95.33 Gew.% Octadecan
4.67 Gew.% Tridecan (C₁₃H₂₈)

Die erhöhte Gleitfähigkeit hat sich insbesondere bei Schneetemperaturen im Bereich von 0°C bis +3°C eingestellt.

### Beispiel K:

93,33 Gew.% Octadecan
4. 67 Gew.% Tridecan
2 Gew.% Kaliumdihydrogenphosphat

## Patentansprüche

1. Gleitmittel. insbesondere Schiwachs zum Auftragen auf die Lauffläche eines Schisportgeräts, wie Schi, Bigfoot, Monoschi, oder Snowboard, **dadurch gekennzeichnet, daß** es zu zumindest 80 Gew.%, insbesondere 90 Gew.%, aus Octadecan (C ₁₈H₃₈) und zum Rest aus zumindest einer anderen Kohlenstoffverbindung besteht.

2. Gleitmittel nach Anspruch 1, **dadurch gekennzeichnet, daß** es zu zumindest 95 Gew.% aus Octadecan (C₁₈H₃₈) besteht.

3. Gleitmittel nach Anspruch 2, **dadurch gekennzeichnet, daß** es zu 95,33 Gew.% aus Octadecan (C₁₈H₃₈) und zu 4,67 Gew.% aus einer anderen Kohlenstoffverbindung besteht.

4. Gleitmittel nach einem der Ansprüche 1 bis 3, **dadurch gekennzeichnet, daß** die andere Kohlenstoffverbindung ein Alkan mit der Strukturformel CₙH₂ₙ₊₂ ist, wobei n=11 bis 36 ist.

5. Gleitmittel nach Anspruch 4, **dadurch gekennzeichnet, daß** die andere Kohlenstoffverbindung Eicosan (C₂₀H₄₂) ist.

6. Gleitmittel nach einem der Ansprüche 1 bis 4, **dadurch gekennzeichnet, daß** die andere Kohlenstoffverbindung ein Fulleren ist.

7. Gleitmittel nach Anspruch 6, **dadurch gekennzeichnet, daß** es zu 99,88 Gew.% aus Octadecan (C₁₈H₃₈) und zu 0,12 Gew.% aus Fulleren besteht.

8. Gleitmittel nach einem der vorhergehenden Ansprüche, **dadurch gekennzeichnet, daß** 0.1 Gew.% bis 2.0 Gew.% Kaliumdihydrogenphosphat beigemischt ist.

## Claims

1. A lubricant, in particular a ski wax for application on the running surface of ski sports equipment such as skis, bigfoot, monoskis or snowboards, **characterized in that** it consists of at least 80% by weight, in particular 90% by weight, of octadecane (C₁₈H₃₈) and the remainder of at least one other carbon compound.

2. A lubricant as claimed in claim 1, **characterized in that** it consists at least to 95% by weight of octadecane (C₁₈H₃₈).

3. A lubricant as claimed in claim 2, **characterized in that** it consists at least to 95.33% of octadecane (C₁₈H₃₈) and to 4.67% by weight of another carbon compound.

4. A lubricant as claimed in one of the claims 1 to 3, **characterized in that** the other carbon compound is an alkane with the structural formula CₙH₂ₙ₊₂, with n=11 to 36.

5. A lubricant as claimed in claim 4, **characterized in that** the other carbon compound is eicosane (C₂₀H₄₂).

6. A lubricant as claimed in one of the claims 1 to 4, **characterized in that** the other carbon compound is a fulleren.

7. A lubricant as claimed in claim 6, **characterized in that** it consists to 99.88% by weight of octadecane (C₁₈H₃₈) and to 0.12% by weight of fulleren.

8. A lubricant as claimed in one of the preceding claims, **characterized in that** 0.1% by weight to 2.0% by weight of potassium dihydrogenphosphate is admixed.

## Revendications

1. Agent de glissement, en particulier fart pour application sur la surface de glissement d'un équipement de sport de glisse tel qu'un ski, un bigfoot, un monoski ou un snowboard, **caractérisé en ce qu'**il se compose au moins à 80 % du poids, en particulier à 90 %, d'octadécane (C₁₈H₃₈) et pour le reste d'un autre composé carboné.

2. Agent de glissement selon la revendication 1, **caractérisé en ce qu'**il se compose à 95 % du poids au moins d'octadécane (C₁₈H₃₈).

3. Agent de glissement selon la revendication 2, **caractérisé en ce qu'**il se compose à 95,33 % du poids au moins d'octadécane (C₁₈H₃₈) et à 4,67 % du poids d'un autre composé carboné.

4. Agent de glissement selon l'une quelconque des revendications 1 à 3, **caractérisé en ce que** l'autre composé carboné est un alcane ayant la formule structurelle CₙH₂ₙ₊₂, où n = 11 à 36.

5. Agent de glissement selon la revendication 4, **caractérisé en ce que** l'autre composé carboné est de l'eicosane (C₂₀H₄₂).

6. Agent de glissement selon l'une quelconque des revendications 1 à 4, **caractérisé en ce que** l'autre composé carboné est un fullerène.

7. Agent de glissement selon la revendication 6, **caractérisé en ce qu'**il se compose à 99,88 % du poids d'octadécane (C₁₈H₃₈) et à 0,12 % du poids de fullerène.

8. Agent de glissement selon l'une quelconque des revendications précédentes, **caractérisé en ce qu'**il est additionné de 0,1 % à 2,0 % du poids de dihydrogénophosphate de potassium.
